Europäisches Patentamt

European Patent Office

Office européen des brevets

(19)

(11) Numéro de publication: **0 291 410**
**A1**

(12) **DEMANDE DE BREVET EUROPEEN**

(21) Numéro de dépôt: **88401148.7**

(22) Date de dépôt: **11.05.88**

(51) Int. Cl.⁴: **A 23 N 1/02**
**B 02 C 7/06**

(30) Priorité: **11.05.87 FR 8706573**

(43) Date de publication de la demande:
**17.11.88 Bulletin 88/46**

(84) Etats contractants désignés:
**AT BE CH DE ES GB GR IT LI NL**

(71) Demandeur: **C B R INNOVATION**
**22 Avenue du Recteur Pineau**
**F-86000 Poitiers (FR)**

(72) Inventeur: **Chesse, Claude-Lucien**
**79, rue de la Vallée**
**F-86000 Poitiers (FR)**

**Buisson, Pierre Jean-Charles**
**35 Allée de la Sigallerie,Vouneuil/Biard**
**F-86000 Poitiers (FR)**

**Ribadière, André**
**47, rue de la Chanterie**
**F-86000 Poitiers (FR)**

(74) Mandataire: **Portal, Gérard et al**
**Cabinet Beau de Loménie 55, rue d'Amsterdam**
**F-75008 Paris (FR)**

(54) **Procédé et installation pour l'extraction des sucs cellulaires de matières premières végétales et/ou de leurs sous-produits.**

(57) La présente invention a pour objet un procédé pour l'extraction des sucs cellulaires de matières premières végétales et/ou de leurs sous-produits ainsi qu'une installation pour la mise en oeuvre de ce procédé.

Selon l'invention, les matières végétales sont broyées par attrition, jusqu'à l'obtention d'un broyat constitué de cellules végétales fragilisées ayant conservé leur structure fibreuse et dont on peut extraire facilement des jus végétaux de pureté convenable et obtenir un tourteau dont la teneur en matière sèche est toujours supérieure à 40 %, sans incorporation de matières fibreuses étrangères à la matière première.

L'invention trouve notamment application dans la production de produits finis, issus de fermentation ou non, destinés à des utilisations agricoles, alimentaires et industrielles.

EP 0 291 410 A1

## Description

### Procédé et installation pour l'extraction des sucs cellulaires de matières premières végétales et/ou de leurs sous-produits.

La présente invention a pour objet un procédé pour l'extraction des sucs cellulaires de matières premières végétales et/ou de leurs sous-produits ainsi qu'une installation pour la mise en oeuvre de ce procédé.

L'invention trouve notamment application dans la production de produits finis, issus de fermentation ou non, destinés à des utilisations agricoles, alimentaires et industrielles.

L'utilisation récente en remplacement des hydrocarbures de produits énergétiques extraits de matières végétales telles que les plantes protéiques et les plantes glucidiques, a conduit au développement de nombreux procédés d'extraction qui visent à obtenir une séparation efficace et poussée des constituants solubles et insolubles présents dans ces matières premières.

Tout d'abord, on a extrait les substances solubles de plantes diverses par brassage dans l'eau de particules plus ou moins fines de plantes, les substances solubles passant ainsi dans l'eau par un phénomène de diffusion osmotique à travers les parois des cellules végétales. Le brevet français n° 921.566 décrit par exemple un procédé d'extraction d'alcool d'une plante sauvage appelée berce basé sur ce principe. Utilisé également pour l'extraction des sucres, ce procédé s'est avéré particulièrement coûteux en raison de l'importante dilution des jus qui augmente la quantité d'eau à éliminer subséquemment par concentration.

Plus tard, on a tenté de séparer les jus végétaux par pressage des matières végétales après un passage préalable de celles-ci sur un broyeur. L'idée était d'appliquer une pression aussi forte que possible pour réaliser au mieux la séparation des matières solubles et insolubles. Utilisé par exemple pour l'extraction des protéines des parties végétatives (tiges et feuilles) de la luzerne, ce procédé engendre cependant la mise en oeuvre de pressions importantes sans que les teneurs en matière sèche des produits pressés ne dépassent pour autant 30 %.

Plus récemment, on a suggéré de nouveaux procédés utilisant des broyeurs spécifiques destinés à provoquer un éclatement cellulaire (et donc une expression de l'eau) maximal des matières premières utilisées, en association avec des systèmes de pressage par presse monovis ou multivis conçus spécifiquement.

C'est ainsi que la demande de brevet français 2.502.909 révèle un procédé d'extraction de jus de tubercules, en particulier de topinambours utilisant comme organe de broyage un broyeur à cylindre avec comme charge broyante des boulets ou des barres. De même, le brevet français 2.522.479 préconise un broyage poussé de la matière première jusqu'à l'éclatement des cellules végétales, obtenu par l'association d'un aplatisseur et d'un broyeur à boulets.

On comprend ainsi que dans cette nouvelle voie, l'homme de métier était guidé vers l'utilisation d un broyeur à cylindres, notamment à boulets tout à fait particulier.

Par ailleurs, pour améliorer la séparation des matières solubles et insolubles, les documents précités prévoient l'adjonction de fibres végétales qui procurent une meilleure pressabilité du broyat lors du pressage et permettent d'éviter les pertes en matière sèche à travers la grille de l'appareil de pressage. Cette adjonction complique le procédé et augmente en conséquence son coût.

Ainsi, les installations envisagées n'ont donné lieu à aucune application industrielle, dans la mesure où la fluidité des substances végétales broyées ne permet pas d'assurer une parfaite continuité du système, sans dilution, ce qui engendre des dépenses d'énergie importantes.

Enfin, le dimensionnement des matériels pour des unités de grande capacité de production rend encore plus difficile l'industrialisation de ces procédés.

La présente invention a pour but de résoudre les problèmes précités en proposant un procédé et une installation pour l'extraction des sucs cellulaires de matières premières végétales et/ou de leurs sous-produits pouvant être appliqués pour tout type de matières végétales à l'échelle industrielle, de conception et de mise en oeuvre facilités, et permettant d'extraire un minimum de 85 % des jus de la plante en première pressée, et d'obtenir un tourteau de pressage dont la teneur en matière sèche est toujours supérieure à 40 % quelle que soit la forme de la plante utilisée (tige, feuille, fleur, racine ou tubercule, ou plante entière).

La solution conforme à la présente invention pour parvenir à cet objectif consiste en un procédé d'extraction du type consistant à broyer lesdites matières végétales jusqu'à l'obtention d'un produit de structure pâteuse appelé broyat et à presser ledit broyat pour extraire les jus végétaux et obtenir un tourteau de siccité élevée, caractérisé en ce que ledit broyage est du type à attrition et en ce que ladite extraction des jus végétaux est réalisée sans incorporation de matières fibreuses, étrangères à la matière première.

L'invention est en effet basée sur la découverte surprenante que l'utilisation d'un broyeur à attrition fournit un broyat constitué de cellules végétales suffisamment fragilisées, tout en conservant leur structure fibreuse et dont on peut extraire des jus végétaux de pureté convenable et obtenir un tourteau dont la teneur en matière sèche est toujours supérieure à 40 % sans incorporation de matières fibreuses. Ce procédé est simple et peut être mis en oeuvre à l'échelle industrielle pour des applications variées comme pour le traitement des betteraves en sucrerie ou distillerie ou le traitement de la luzerne pour l'extraction des protéines, ou le traitement de la betterave rouge pour l'extraction de colorants.

Selon une caractéristique particulière, l'opération de pressage est réalisée à une température inférieure à 55°C. On a en effet constaté que la température de pressage influençait le débit instantané de la presse, et les qualités naturelles des fibres de la plante comme adjuvant de pressage, dans des conditions de fonctionnement préalablement fixées.

Selon une variante d'exécution, l'opération de broyage est réalisée avec recyclage d'une partie des jus, avec ou sans dilution.

Par ailleurs, l'installation conforme à l'invention pour la mise en oeuvre de ce procédé et comprenant un organe de broyage desdites matières végétales en un broyat, éventuellement associé à un organe de lavage et un organe de pré-broyage recevant les matières végétales lavées et les transformant en morceaux ou particules, un dispositif de pressage du type à vis hélicoïdale et grille de pressage destiné à presser ledit broyat pour obtenir un jus et un tourteau est caractérisée en ce que ledit organe de broyage est un broyeur du type à attrition tel qu'un broyeur à disques dont on décrira ci-dessous le principe de fonctionnement en référence aux dessins annexés.

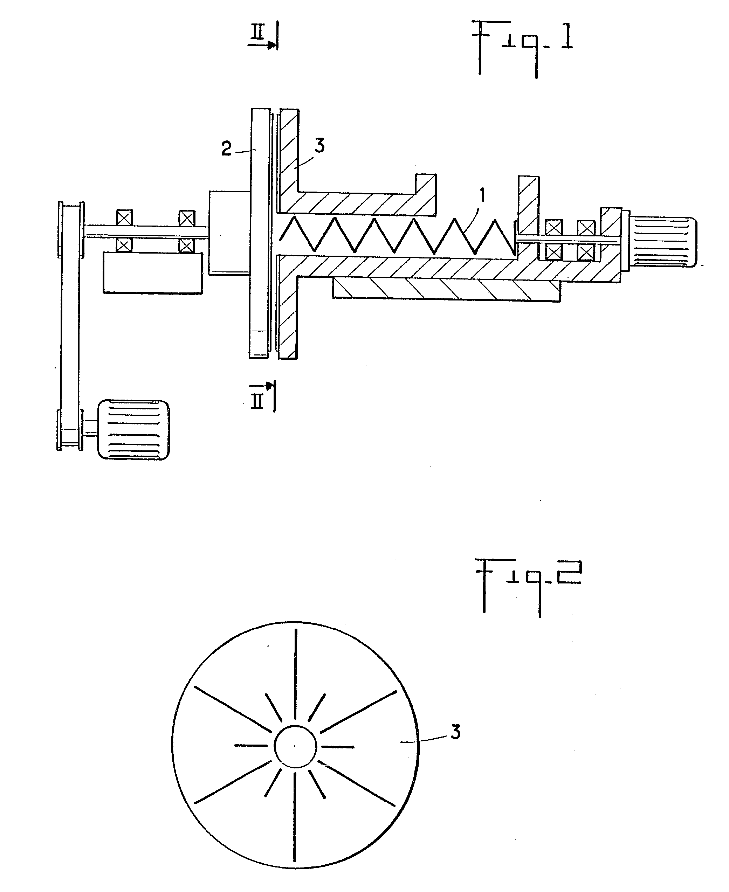

Plus précisément en référence à la figure 1, ce principe est le suivant : Une vis d'alimentation 1 permet d'amener la matière à broyer entre les disques 2 et 3, qui sont distants l'un de l'autre d'un jeu réglable d.

Le disque 2 tourne à grande vitesse, relativement au disque 3.

Comme le montre la figure 2 qui est une vue en coupe suivant la ligne II-II de la figure 1, les disques de broyage 2 et 3, de forme sensiblement circulaire sont pourvus de nervures généralement radiales formant surface de broyage et qui sont destinées à provoquer la fragilisation des cellules végétales pour extraire le jus tout en conservant leur structure fibreuse pour permettre le pressage sans extrusion.

Avantageusement, l'organe de pressage à vis est du type à étages multiples tel que décrit en particulier dans le brevet français n° 2 522 586 (inclus ici pour référence), ou comportant seulement les deux premières vis successives.

L'invention peut être appliquée pour l'extraction de sucs cellulaires de matières végétales variées et en particulier les plantes protéiniques telles que notamment luzerne, trèfle ou ray grass et les plantes glucidiques telles que notamment topinambours, betteraves, cannes à sucre, manioc, sorgho sucrier. Cette polyvalence constitue également une originalité de l'invention. Celle-ci sera mieux comprise, et d'autres buts, détails et avantages apparaîtront plus clairement à la lecture de la description explicative qui va suivre de deux applications concrètes du procédé de l'invention, données uniquement à titre d'exemples non limitatifs.

Dans ces exemples on a utilisé une presse à vis multi-étages identique à celle décrite dans le brevet français n° 2 522 586, et un broyeur à disques, de marque SPROUT WALDRON.

Exemple 1 : Extraction de jus de topinambours.
On introduit en continu, et sans dilution dans le broyeur à disques les tubercules lavés, et grossièrement découpés en morceaux de 5 à 7 cm de côté.

L'écartement d entre les disques est choisi préférentiellement à 1,5 mm. On constate en effet que la totalité des cellules végétales fragilisées ont libéré leur contenu et que la structure fibreuse des membranes cellulaires est néanmoins conservée, en permettant ainsi d'éviter l'utilisation de fibres végétales additionnelles comme adjuvant de filtration-pressage.

Le broyat est dirigé vers le poste de filtration-pressage après chauffage à 45°C.

Dans ces conditions expérimentales, une tonne de broyat de topinambours, ayant une matière sèche totale de 20 % fournit 857 kg de jus à 16,7 % de matière sèche et 143 kg de tourteau à 40 % de matière sèche.

Exemple 2 : Extraction de jus protéique de luzerne
La luzerne est découpée grossièrement en brins de 5 à 7 cm de long, puis transportée par une alimentation continue sur un tapis à refus à la trémie d'un broyeur à disques.

Un recyclage de 70 % sous forme d'eau au démarrage, puis de jus de pressage avec un réglage d = 0,3 mm, permet d'obtenir un broyat présentant les caractéristiques requises pour le pressage subséquent.

Le broyat est ensuite transféré vers le poste de filtration-pressage, et les résultats sont les suivants : 1 tonne de luzerne ayant une teneur en matière sèche de 16 % et 2,8 % de protéines extractibles, fournit 768 kg de jus et 232 kg de tourteau présentant une teneur en matière sèche de 45 %.

Le procédé et l'installation qui viennent d'être décrits offrent les avantages principaux suivants :

- On obtient en continu des sucs cellulaires végétaux à faible prix, avec un minimum de coût énergétique, pour l'obtention des produits finis ;

- On obtient un rendement excellent de récupération des jus, puisque dans le cas des sucres avec un seul passage et sans dilution, le rendement global peut atteindre 90 et 92 % ;

- On dispose d'un tourteau à faible teneur en eau, de l'ordre de 55 %, ce qui limite ainsi les coûts de déshydratation.

Comme on le comprendra, les conditions optimales de fonctionnement telles que la détermination de l'écartement entre disques, le réglage de la température lors du pressage et du taux de recyclage peuvent être facilement déterminés, dans chaque cas par l'homme de l'art.

Ainsi, dans le cas du radis noir, on a obtenu les meilleurs résultats en utilisant pour un pressage à froid (20°C) sans recyclage de fibres, un écartement de 2 mm. Par ailleurs, on a observé qu'une augmentation importante du débit instantané se produisait lorsque la température de pressage avoisinait 50°C.

**Revendications**

1. Procédé pour l'extraction des sucs cellulaires de matières premières végétales et/ou de leurs sous-produits, du type consistant à broyer lesdites matières végétales ayant éventuellement subies un pré-broyage, jusqu'à l'obtention d'un produit de structure pâteuse appelé broyat et à presser ledit broyat pour extraire les jus végétaux et obtenir un tourteau de siccité élevée, caractérisé en ce que ledit broyage est du type à attrition et en ce que ladite extraction des jus végétaux est réalisée sans incorporation de matières fibreuses, étrangères à la matière première.

2. Procédé selon la revendication 1, caractérisé en ce que l'opération de broyage par attrition précitée peut être réalisée avec recyclage d'une partie des jus de pressage, avec ou sans dilution.

3. Procédé selon la revendication 1 ou 2, caractérisé en ce que l'opération de pressage précitée est réalisée à une température inférieure à 55°C.

4. Installation pour l'extraction des sucs cellulaires de matières premières végétales ou de leurs sous-produits comprenant un organe de broyage desdites matières végétales en un broyat, éventuellement associé à un organe de lavage et un organe de pré-broyage recevant les matières végétales lavées et les transformant en morceaux ou particules ; un dispositif de pressage du type à vis hélicoïdale et grille de pressage destiné à presser ledit broyat pour extraire le jus et obtenir un tourteau, caractérisée en ce que ledit organe de broyage est un broyeur du type à attrition.

5. Installation selon la revendication 4, caractérisée en ce que le broyeur précité est un broyeur à disques.

6. Installation selon la revendication 4 ou 5, caractérisée en ce que l'organe de pressage à vis précité est du type à étages multiples.

Fig. 1

Fig. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | FR-A-2 502 909  (ALSTHOM-ATLANTIQUE S.A.) <br> * En entier * | 1,4 | A 23 N    1/02 <br> B 02 C    7/06 |
| A | | 2,3 | |
| Y | FR-A-2 324 246  (TOBACCO RESEARCH AND DEVELOPMENT INSTITUTE LTD) <br> * Page 2, lignes 1-13; figures 1,2 * | 1 | |
| Y | US-A-3 845 909  (I.J.G. JOHANSSON) <br> * Abrégé; figure 1 * | 4 | |
| A | | 5,6 | |
| A | US-A-4 202 505  (E. RUUSKANEN) | | |
| A | FR-A-2 348 742  (T. YAGI) | | |
| D,A | FR-A-2 522 479  (SOCIETE DE VALORISATION AGROBIOLOGIQUE) | | |
| D,A | FR-A-  921 566  (J. CATINEAU et al.) | | |
| D,A | FR-A-2 522 586  (SOCIETE DE VALORISATION AGROBIOLOGIQUE) | | |

DOMAINES TECHNIQUES RECHERCHES (Int. Cl.4)

A 23 N
B 02 C
A 47 J

Le présent rapport a été établi pour toutes les revendications

| Lieu de la recherche | Date d'achèvement de la recherche | Examinateur |
|---|---|---|
| LA HAYE | 18-07-1988 | NEHRDICH H.J |